# EUROPÄISCHE PATENTSCHRIFT

(11) **EP 2 203 244 B1**
(45) Veröffentlichungstag und Bekanntmachung des Hinweises auf die Patenterteilung: **09.02.2011**
(21) Anmeldenummer: 08804282.5
(22) Anmeldetag: 17.09.2008
(51) Int. Cl.: B01D 69/08, B01D 71/02, B01D 67/00, D01F 1/08, D01F 9/12

(54) **VERFAHREN ZUR HERSTELLUNG VON KOHLENSTOFF-HOHLFASERN**
METHOD FOR THE PRODUCTION OF HOLLOW CARBON FIBRES
PROCÉDÉ POUR LE FABRICATION DE FIBRES CREUSES DE CARBONE

(30) Priorität: 11.10.2007 EP 07019898
(43) Veröffentlichungstag der Anmeldung: 07.07.2010
(73) Patentinhaber: Toho Tenax Co., Ltd., Sunto-gun Shizuoka 411-8720 (JP)
(72) Erfinder: WÖLKI, Michael, 40219 Düsseldorf (DE); WOHLMANN, Bernd, 40627 Düsseldorf (DE); KAISER, Mathias, 76307 Karlsbad (DE); EMMERICH, Rudolf, 76456 Kuppenheim (DE); HENNING, Frank, 76327 Pfinztal (DE)
(74) Vertreter: Schröder, Richard
(86) Internationale Anmeldenummer: PCT/EP2008/062326
(87) Internationale Veröffentlichungsnummer: WO 2009/049981

(56) Entgegenhaltungen:
- WO-A-01/55487
- DE-A1- 19 749 475
- US-A- 4 685 940
- US-A- 5 089 135
- US-A- 5 298 313
- US-A- 5 338 605
- SAUFI S M ET AL: "Fabrication of carbon membranes for gas separation--a review" CARBON, Bd. 42, Nr. 2, 2004, Seiten 241-259, XP004483335 ISSN: 0008-6223

## Beschreibung

Die Erfindung betrifft ein Verfahren zur kontinuierlichen Herstellung von Kohlenstoff-Hohlfasern.

Kohlenstoff-Hohlfasern werden für eine Reihe von Anwendungen eingesetzt wie z.B. für Adsorptions-/Desorptionsaufgaben zur Entfernung von Verunreinigungen in geringen Konzentrationen aus Gasen oder Flüssigkeiten oder auch im Bereich der Flüssigkeits- oder Gasseparation, wobei in diesen Fällen semipermeable oder auch poröse Kohlenstoff-Hohlfasern zum Einsatz kommen. Darüber hinaus finden Kohlenstoff-Hohlfasern auch im Bereich der Faserverbundwerkstoffe Verwendung.

Die Herstellung von porösen Kohlenstoff-Hohlfasern wird beispielsweise in der EP 0 394 449 A1 beschrieben. Das dort offenbarte Verfahren sieht vor, Lösungen aus einem Polyacrylnitril (PAN)-basierten Polymer A und einem bei Hitze zersetzbaren (pyrolisierbaren) Polymer B mittels einer Hohlfaserdüse zu einer Hohlfaser zu verspinnen und aus dieser durch Koagulation eine aus den Polymeren A und B gebildete Hohlfasermembran auszubilden. Die erhaltene Hohlfasermembran wird einer Oxidationsbehandlung und anschließend einer Karbonisierung unterzogen, wobei sich das hitzezersetzbare Polymer B zu niedermolekularen Bestandteilen zersetzt, die aus der Hohlfasermembran entweichen. Hierdurch wird eine poröse Hohlfasermembran erhalten.

In der EP 0 252 339 B1 wird ebenfalls ein Verfahren zur Herstellung einer porösen Kohlenstoff-Hohlfasermembran beschrieben, bei welchem eine Karbonisierung einer Poren aufweisenden Membran aus einem Acrylnitrilpolymeren erfolgt. Die Polyacrylnitrilmembran wird mit einer Hydrazinlösung vorbehandelt, anschließend bei einer Temperatur im Bereich von 180 bis 350 °C voroxidiert und schließlich bei einer Temperatur im Bereich von 600 bis 3000 °C karbonisiert. Als Vorrichtungen zur Durchführung der Voroxidation sowie der Karbonisierung werden elektrisch beheizte Öfen offenbart. Die Membranen der EP 0 252 339 B1 sind für Anwendungen im Bereich der Ultra- und der Mikrofiltration geeignet und weisen Porendurchmesser im Bereich von 0,005 bis 3 µm auf. Ihre Wanddicke liegt im Bereich von 5 bis 200 µm. Die im einzigen Ausführungsbeispiel offenbarte Kohlenstoff-Hohlfasermembran weist einen Innendurchmesser von 700 µm und eine Wandstärke von 120 µm auf. Wegen der durch den Einsatz des giftigen und kanzerogenen Hydrazins erforderlichen hohen Vorsorgemaßnahmen ist das Verfahren der EP 0 252 339 B1 nicht wirtschaftlich durchführbar. Außerdem ist das Verfahren der EP 0 252 339 B1 wie auch das der EP 0 394 449 A1 in der Praxis auf die Herstellung relativ großlumiger und dickwandiger Kohlenstoff-Hohlfasern beschränkt.

Aus der WO 01/55 487-A ist ein Karbonisierungs verfahren für lumen freie Fasern bekannt, bei der Plasma sowie elektromagnetische Felder eingesetzt werden.

Für den Einsatz als Verstärkungsmaterial in Verbundwerkstoffen, aber auch für Aufgaben im Bereich der Adsorption bzw. Desorption besteht jedoch neben den bereits erhältlichen Kohlenstoff-Hohlfasern auch ein Bedarf an kleinlumigeren und dünnwandigeren Kohlenstoff-Hohlfasern. Derartige Kohlenstoff-Hohlfasern sind mit den bislang bekannten Verfahren jedoch nicht herstellbar. Gleichzeitig sind die Verfahren des Stands der Technik aufwendig wegen der erforderlichen Verwendung spezieller Abmischungen von Polymeren in den Ausgangsmaterialien oder wegen des Einsatzes gesundheitsgefährdender Substanzen.

Es ist daher Aufgabe der vorliegenden Erfindung, ein Verfahren zur Herstellung von Kohlenstoff-Hohlfasern zur Verfügung zu stellen, welches gegenüber den Verfahren des Stands der Technik vereinfacht ist und mittels dessen sich auch Kohlenstoff-Hohlfasern mit kleinem Lumen und geringer Wandstärke herstellen lassen, die auch für den Einsatz als Verstärkungsfasern für Verbundwerkstoffe geeignet sind.

Die Aufgabe wird gelöst durch ein Verfahren zur Herstellung von Kohlenstoff-Hohlfasern, umfassend die Schritte:
- Vorlegen eines stabilisierten Kohlenstofffaser-Precursors, wobei der stabilisierte Kohlenstofffaser-Precursor hohlvolumenfrei ist,
- Bereitstellen einer Applikationsvorrichtung zur Behandlung des stabilisierten Kohlenstofffaser-Precursors mit hochfrequenten elektromagnetischen Wellen, welche Mittel zur Zuführung der elektromagnetischen Wellen in einen Auskoppelbereich umfasst sowie einen in den Auskoppelbereich mündenden hohlen Außenleiter,
- Erzeugen eines Feldes der hochfrequenten elektromagnetischen Wellen und Einstellen einer Feldstärke im Auskoppelbereich der Applikationsvorrichtung im Bereich von 15 bis 40 kV/m,
- kontinuierliches Hindurchführen des stabilisierten Kohlenstofffaser-Precursors als Innenleiter durch den hohlen Außenleiter, wodurch ein aus Außenleiter und Innenleiter bestehender Koaxialleiter ausgebildet wird, sowie durch den sich anschließenden Auskoppelbereich, dabei
- Erzeugen einer Schutzgasatmosphäre im Koaxialleiter sowie im Auskoppelbereich durch Hindurchleiten eines Schutzgases.

Unter einem stabilisierten Kohlenstofffaser-Precursor werden im Rahmen der vorliegenden Erfindung Fasern verstanden, die durch an sich bekannte Verfahrensmaßnahmen in unschmelzbare Fasern umgewandelt wurden. Nur derartige unschmelzbare Fasern eigen sich für sich anschließende Karbonisierungsschritte, die zur Erzeugung von Kohlenstofffasern erforderlich sind. Als Ausgangsmaterialien können die bei der Kohlenstofffaserherstellung üblicherweise verwendeten Precursormaterialien aus Polyacrylnitril (PAN), Pech oder Rayon eingesetzt werden, für die nach der Karbonisierung Kohlenstofffasern mit guten mechanischen und Adsorptionseigenschaften erhalten werden. Die Stabilisierung der Precursor erfolgt üblicherweise in Luft bei ca. 150-300°C. Hierdurch wird durch chemische Umwandlung eine oxidierte, unschmelzbare und somit stabilisierte Faser erhalten. Die im erfindungsgemäßen Verfahren vorgelegten Fasern des Kohlenstofffaser-Precursors weisen einen Vollquerschnitt auf, sind also hohlvolumenfrei.

Bei Durchführung des erfindungsgemäßen Verfahrens werden z.B. in einem Magnetron hochfrequente elektromagnetische Wellen erzeugt, die über geeignete Mittel, vorzugsweise über einen Hohlleiter in den Auskoppelbereich der Applikationsvorrichtung geführt werden. Im Auskoppelbereich wird die Feldstärke hochfrequenten elektromagnetischen Wellen auf ein Niveau eingestellt, das einer Feldstärke im Auskoppelbereich im Bereich von 15 bis 40 kV/m im unbeschickten Zustand entspricht, d.h. einem Zustand, bei dem der zu karbonisierende stabilisierte Kohlenstofffaser-Precursor den Auskoppelbereich nicht durchläuft sondern an seiner Statt ein elektrischer Leiter eingeführt ist.

In einer bevorzugten Ausführungsform des erfindungsgemäßen Verfahrens ist der Auskoppelbereich ein Hohlraumresonator. In diesem Fall wird im einfachsten Fall vor Einführen des zu karbonisierenden stabilisierten Kohlenstofffaser-Precursors die Feldstärke im Bereich von 15 bis 40 kV/m direkt im Hohlraumresonator eingestellt und anschließend der Precursor in die Applikationsvorrichtung eingeführt und durch sie hindurchgeleitet. In einer weiteren bevorzugten Ausführungsform des erfindungsgemäßen Verfahrens ist der Auskoppelbereich eine Hohlkammer, in der sich ein Koppelkegel zu Auskopplung der über z.B. einen Hohlleiter zugeführten Energie der hochfrequenten elektromagnetischen Wellen befindet. In diesem Fall wird zur Einstellung der erfindungsgemäß geforderten Feldstärke zunächst ein elektrischer Leiter, also z.B. ein Metalldraht, eine Kohlenstofffaser oder eine Kohlenstoffhohlfaser, durch den hohlen Außenleiter und die Hohlkammer geführt und dann ein Feld mit einer Feldstärke im Bereich von 15 bis 40 kV/m eingestellt. In jedem Fall wird die vorgenommene Einstellung, die zu der erforderlichen Feldstärke geführt hat, ohne dass der zu karbonisierende stabilisierte Kohlenstofffaser-Precursor sich in der Applikationsvorrichtung befand, beim späteren Hindurchführen des zu behandelnden Precursors beibehalten, wenngleich beim Hindurchführen des Precursors eine Veränderung der Feldstärke eintritt. Überraschenderweise werden bei den auf die erfindungsgemäß geforderten Werte eingestellten Feldstärken insbesondere auch bei Verwendung eines Kohlenstofffaser-Precursors, dessen Filamente einen Vollquerschnitt aufweisen, karbonisierte Hohlfasern, also Kohlenstoff-Hohlfasern erhalten. Natürlich ist es auch möglich, die in Vorversuchen ermittelten Einstellungen zur Erzeugung einer Feldstärke im Bereich von 15 bis 40 kV/m im unbeschickten Resonator bzw. in der unbeschickten Hohlkammer bei einem späteren Durchführen des erfindungsgemäßen Verfahrens in der betreffenden Applikationsvorrichtung auch während des Betriebs, d.h. während der Precursor die Applikationsvorrichtung durchläuft, einzustellen, um so die gewünschte Kohlenstoff-Hohlfaser zu erhalten.

Bevorzugt sind hochfrequente elektromagnetische Wellen einer Frequenz von 300 MHz bis 300 GHz, die allgemein als Mikrowellen bezeichnet werden. Besonders bevorzugt sind Mikrowellen im Bereich von 900 MHz und 10 GHz. Standardmäßig werden Mikrowellen mit einer Frequenz von 915 MHz und 2,45 GHz verwendet, die für die Durchführung des erfindungsgemäßen Verfahrens bestens geeignet sind.

Die Anwendung von Mikrowellenenergie bei der Herstellung von Kohlenstofffasern ist bereits bekannt. Dabei ergeben sich auf Grund der Besonderheit der eingesetzten Precursormaterialien sowie der an ihnen erfolgenden Materialänderungen besondere Anforderungen an die Prozessführung und Prozesskontrolle im Hinblick auf das Erreichen einer homogenen und kontinuierlichen Faserbehandlung. Fasern, Garne und Stränge aus stabilisierten Precursorfasern sind schlechte elektrische Leiter und mäßige Absorber von hochfrequenten elektromagnetischen Wellen wie beispielsweise Mikrowellen. Mit der Bestrahlung mit den hochfrequenten elektromagnetischen Wellen beginnt der Übergang zur vollständigen Karbonisierung und zunehmender Graphitisierung, was zu einem starken Anwachsen der elektrischen Leitfähigkeit der behandelten Fasern führt. Ist die Graphitisierung abgeschlossen, verhält sich die Faser wie ein Draht im Hohlleiter und führt zu starken Verzerrungen und Störungen des elektrischen Feldes im Hohlleiter oder in der Resonatoranordnung. Ohne Regelung treten Inhomogenitäten und Störungen auf, die die Homogenität und die Prozessstabilität der Graphitisierung beeinflussen, oder im Extrem zur Zündung von Entladungen und Lichtbögen oder der thermischen Verdampfung der Faser führen können.

Aus der US 4 197 282 A ist ein Verfahren zur Herstellung von Kohlenstofffasern aus Pech unter Zuhilfenahme von Mikrowellen bekannt. Zu diesem Verfahren wird ausgeführt, dass die Mikrowellenbehandlung erst nach einer vorbereitenden Hitzebehandlung des stabilisierten Precursors in inerter Atmosphäre bei 450 bis 1000°C durchgeführt werden kann. Die Hitzebehandlung bewirkt gemäß US 4 197 282 A, dass die Precursorfasern bereits so weit umgewandelt werden (Mesophase bei Pechfasern), dass sie durch die hohe Frequenz der Mikrowelle angeregt werden können. Mittels des Verfahrens der US 4 197 282 A werden Kohlenstofffasern erhalten, die als Verstärkungsfasern in Verbundwerkstoffen einsetzbar sind und deren Filamente einen Vollquerschnitt haben.

Die europäische Patentanmeldung EP-A-1 845 179 beschreibt ein Verfahren zur kontinuierlichen Herstellung von Kohlenstofffasern, bei dem stabilisierte Precursorfasern kontinuierlich als Innenleiter eines aus Außenleiter und Innenleiter bestehenden Koaxialleiters und durch eine Behandlungszone geführt werden, in der Behandlungszone den stabilisierten Precursorfasern hochfrequente elektromagnetische Wellen, vorzugsweise Mikrowellen, zugeführt werden, welche die Precursorfasern absorbieren, wodurch sich die Precursorfasern erhitzen und zu Kohlenstofffasern umgewandelt werden. Die stabilisierten Precursorfasern beziehungsweise die Kohlenstofffasern werden unter Schutzgasatmosphäre durch den Koaxialleiter und die Behandlungszone geführt. Auch mittels des in dieser Schrift offenbarten Verfahrens werden jedoch keine Kohlenstoff-Hohlfasern erhalten. Bei dem dort beschriebenen Verfahren wird, in ähnlicher Weise wie dies in der DE 10 2004 021 016 A1 beschrieben wird, Mikrowellenenergie aus einem Rechteckhohlleiter beispielsweise über einen Koppelkegel in einen Koaxialleiter ausgekoppelt. Im Unterschied zu dem in der DE 10 2004 021 016 A1 eingesetzten Koaxialleiter, bei dem sowohl der Außenleiter als auch der Innenleiter feste Bestandteile des Koaxialleiters sind, wird bei dem Verfahren der europäischen Patentanmeldung EP-A-1 845 179 der Innenleiter durch die stabilisierte Precursorfasern ausgebildet, die kontinuierlich durch den Außenleiter hindurchgeführt werden, wobei unter stabilisierten Precursorfasern in der genannten europäischen Patentanmeldung vorzugsweise vorkarbonisierte Precursorfasern zu verstehen sind. Das erfindungsgemäße Verfahren basiert auf dem Verfahren der EP-A-1 845 179, auf deren diesbezügliche Offenbarung sich hier ausdrücklich bezogen wird.

Bei Durchführung des erfindungsgemäßen Verfahrens wird der vorgelegte stabilisierte Kohlenstofffaser-Precursor über den in den Auskoppelbereich mündenden hohlen Außenleiter in die Applikationsvorrichtung eingeführt und kontinuierlich durch den hohlen Außenleiter hindurchgeführt. Dabei wird ein Koaxialleiter ausgebildet, wobei der hohle Außenleiter die Funktion des Außenleiters und der im Außenleiter geführte Precursor die Funktion des Innenleiters übernimmt. Nach Austritt aus dem Koaxialleiter durchläuft der dann bereits zum Teil behandelte Precursor den sich anschließenden Auskopplungsbereich und tritt an der dem Koaxialleiter abgewandten Seite des Auskopplungsbereichs aus dem Auskopplungsbereich und aus der Applikationsvorrichtung als karbonisierte Kohlenstoff-Hohlfaser aus.

Da die stabilisierten Kohlenstoff-Precursorfasern eine sehr geringe Leitfähigkeit aufweisen, bewirkt die Energie der hochfrequenten elektromagnetischen Wellen, dass die Precursorfasern über Absorption im Auskoppelungsbereich erwärmt werden. Mit zunehmender Erwärmung wandeln sich die Precursorfasern in ein Material um, das zunächst besser absorbiert und sich dadurch noch besser erwärmt und infolge der steigenden Erwärmung auch karbonisiert, wodurch aus den Precursorfasern nunmehr Kohlenstofffasern entstehen. Durch diese Umwandlung werden die entstehenden Kohlenstofffasern zunehmend leitfähiger, wodurch die Energie der hochfrequenten elektromagnetischen Wellen immer mehr in den Koaxialübergang ausgekoppelt wird, und wodurch eine weitere Behandlung der Kohlenstofffasern verhindert wird. Die ausgekoppelte Energie der hochfrequenten elektromagnetischen Wellen startet bereits im Koaxialleiter die Behandlung der Precursorfasem, so dass beim Hindurchführen der Precursorfasern durch den Koaxialleiter ein sich selbstregulierendes System einstellt. Dabei bildet sich in einer Zone des Auskoppelungsbereichs, in dem die Energie der hochfrequenten elektromagnetischen Wellen ausgekoppelt wird, sowie in einem Teil des Koaxialleiters eine kurze, sich meist nur über wenige Zentimeter erstreckende Reaktions- oder Behandlungszone aus, in welcher zumindest überwiegend die Umwandlungsreaktion zur Kohlenstoff-Hohlfaser erfolgt.

Für die Durchführung des erfindungsgemäßen Verfahrens ist es dabei erforderlich, dass in der Behandlungszone dem stabilisierten Precursor hochfrequente elektromagnetische Wellen mit genügend hoher Energie zugeführt werden. Hierzu liegt, wie ausgeführt, im Auskoppelbereich ein Feld elektromagnetischer Wellen vor, dessen Feldstärke so eingestellt ist, dass im unbeschickten Auskoppelbereich eine elektrische Feldstärke von 15 bis 40 kV/m resultiert. Diese Feld weist auch bei hindurchgeführtem zu karbonisierenden Precursor eine genügend hohe Energie auf, so dass es bei der Karbonisierung zur Ausbildung eines durchgehenden Hohlraums bzw. eines Lumens in den Filamenten des vorgelegten Precursors und damit zur Bildung von Kohlenstoff-Hohlfasern kommt.

Ohne an die Theorie gebunden sein zu wollen wird vermutet, dass bei Durchführung des erfindungsgemäßen Verfahrens, bei Anlegen eines elektrischen Feldes mit einer Feldstärke oberhalb von 15 kV/m durch die Adsorption der Mikrowellen die volumetrische Erhitzung der Precursors so schnell und ausgeprägt ist, dass die Umwandlungsprozesse, d.h. die zumindest teilweise Karbonisierung des Precursors, beschleunigt werden. Dabei ist die Geschwindigkeit der Umwandlungsprozesse so ausgeprägt, dass die bei der Karbonisierung entstehenden, Sauerstoff, Stickstoff und Wasserstoff enthaltenden Gase nicht schnell genug aus dem sich umwandelnden Precursormaterial abgeführt werden können, wodurch eine Hohlstruktur, d.h. Kohlenstoff-Hohlfasern entstehen. Gleichzeitig wird eine Zunahme des Volumens des sich umwandelnden Precursormaterials infolge der Entstehung und des verzögerten Abtransports der Gase beobachtet, so dass der Querschnitt der resultierenden Kohlenstoff-Hohlfasern gegenüber dem Querschnitt der vorgelegten stabilisierten Precursorfasern vergrößert ist. Insgesamt ist hierzu natürlich erforderlich, dass sich die Fasern während des Gasentwicklungsprozesses noch hinreichend plastisch verhalten. Unterhalb einer Feldstärke von 15 kV/m laufen die Umwandlungsvorgänge hingegen noch relativ langsam ab, so dass die Gase relativ langsam entstehen und gleichzeitig schnell genug entweichen können, was die Ausbildung von Vollfäden zur Folge hat. Oberhalb einer Feldstärke von 40 kV/m lassen sich hingegen keine stabilen Prozessbedingungen bzgl. der Karbonisierung mehr erreichen. Zum Teil kommt es zu einer Zerstörung der Fasern. In einer bevorzugten Ausführung des erfindungsgemäßen Verfahrens liegt die Feldstärke im Bereich von 20 bis 30 kV/m.

Wie zuvor ausgeführt, werden bei der Karbonisierung des Precursors Gase freigesetzt. Für die Ausbildung der Hohlraumstruktur in der entstehenden Kohlenstofffaser ist es offensichtlich erforderlich, dass zum einen bei der Karbonisierung diese Gase so schnell entstehen, dass sie nicht schnell genug abgeführt werden können. Zum anderen setzt dies gleichzeitig voraus, dass der vorgelegte Precursor, bevor er der erfindungsgemäßen Behandlung mit hochfrequenten elektromagnetischen Wellen unterzogen wird, einen genügend hohen Anteil an solchen Bestandteilen aufweist, die bei der Karbonisierung zu gasförmigen Produkten führt. Dieser Anteil hängt zum einen vom Material des vorgelegten Precursors ab, zum anderen verändert er sich z.B. in Abhängigkeit von den bei der Stabilisierung des Precursors eingestellten Oxidationsbedingungen. So wurde festgestellt, dass der Anteil an Bestandteilen, der bei der Karbonisierung zu gasförmigen Produkten führt, durch die Dauer der Oxidationsbehandlung sowie die Temperatur bei der Oxidation maßgeblich beeinflusst wird. Vorzugsweise enthält der im erfindungsgemäßen Verfahren eingesetzte stabilisierte Kohlenstofffaser-Precursor einen Anteil an bei der Karbonisierung flüchtigen Elemente H, N und O von mindestens 30 Gew.-% und besonders bevorzugt von mindestens 35 Gew.-%. Der Anteil an diesen Elementen kann auf einfache Weise über übliche Methoden zur Elementanalyse ermittelt werden. Unter diesen Bedingungen werden in einer bevorzugten Ausführungsform Kohlenstoff-Hohlfasern erhalten, die neben der Hohlstruktur, d.h. neben dem Lumen auch poröse Wände aufweisen. Derartige Kohlenstoff-Hohlfasern sind wegen ihrer großen Oberfläche besonders z.B. Adsorptions- bzw. Desorptionsaufgaben geeignet.

In einer weiteren bevorzugten Ausführungsform des erfindungsgemäßen Verfahrens ist der stabilisierte Kohlenstofffaser-Precursor aus Polyacrylnitril hergestellt. Generell kann bei dem erfindungsgemäßen Verfahren in einer vorteilhaften Ausführungsform auf stabilisierte Precursorgame zurückgegriffen werden, wie sie üblicherweise zur Herstellung von Kohlenstofffasern, die als Verstärkungsfasern in Verbundwerkstoffen eingesetzt werden, verwendet werden. Bevorzugte Precursorgarne umfassen 1000 bis 24000 Filamente, wobei die Filamente einen Durchmesser zwischen 7 und 20 µm aufweisen. Ausgehend von solchen bevorzugten Precursorgarnen lassen sich mittels des erfindungsgemäßen Verfahrens Kohlenstoff-Hohlfasern mit geringem Durchmesser und geringer Wandstärke herstellen, wie sie mit den bislang bekannten Verfahren nicht zur Verfügung gestellt werden konnten.

Mittels des erfindungsgemäßen Verfahrens lassen sich daher bevorzugt Kohlenstoff-Hohlfaser mit einem durchgehenden, sich in Längsachse der Faser erstreckenden Lumen herstellen, wobei die Kohlenstoff-Hohlfaser einen Innendurchmesser im Bereich zwischen 5 und 20 µm und eine Wandstärke im Bereich zwischen 1,5 und 7 µm aufweist. Vorzugsweise liegt der Innendurchmesser im Bereich zwischen 8 und 15 µm und die Wandstärke im Bereich zwischen 2 und 5 µm. Die mittel des erfindungsgemäßen Verfahrens hergestellte Kohlenstoff-Hohlfaser besitzt in einer vorteilhaften Ausführungsform eine Wand mit poröser Struktur.

Die erfindungsgemäß geforderte Schutzgasatmosphäre um die stabilisierten Precursorfasern im Auskopplungsbereich und im Koaxialleiter kann in einfacher Weise beispielsweise dadurch aufrecht erhalten werden, dass eine für die Energie der hochfrequenten elektromagnetischen Wellen bzw. Mikrowellen durchlässige Röhre innerhalb des Außenleiters des Koaxialleiters und der Behandlungszone angeordnet wird und die stabilisierten Precursorfasern als Innenleiter wie auch das Schutzgas durch diese Röhre hindurch geführt werden. Als Materialien für diese Röhre kommen keramische Materialien wie z.B. Quarz, Aluminiumoxid und ähnliche in Frage. Dabei hat es sich als Vorteil herausgestellt, wenn das für die Erzeugung der Schutzgasatmosphäre verwendete Gas Stickstoff ist. Von besonderem Vorteil ist es, wenn in die Schutzgasatmosphäre geringe Mengen an Sauerstoff beigegeben werden. Auf diese Weise kann der in der Regel nach Abschluss der Karbonisierung vorgenommene Behandlungsschritt der Oxidierung bei dem erfindungsgemäßen Verfahren direkt beim Karbonisieren durchgeführt werden. Die Zugabe von Sauerstoff kann beispielsweise dadurch bewirkt werden, dass bei den zugeführten Precursorfasern die zwischen den Fasern enthaltene Luft vor Einführung in den Koaxialleiter nicht entfernt wird. Es ist aber auch ohne weiteres möglich, Sauerstoff in gezielter gleichmäßiger Dosierung der Schutzgasatmosphäre zuzuführen.

Eine bevorzugte Ausführungsform des erfindungsgemäßen Verfahrens zeichnet sich dadurch aus, dass die stabilisierten Precursorfasern mit einer solchen Geschwindigkeit durch den Koaxialleiter geführt werden, dass sie beim Verlassen des Koaxialleiters in der Behandlungszone vollständig karbonisiert werden. Dabei wird unter vollständiger Karbonisierung eine Karbonisierung verstanden, bei der eine Kohlenstofffaser mit einem Anteil an Kohlenstoff von mindestens 75 Gew.-% erhalten wird.

Besonders günstig ist es, wenn die Geschwindigkeit, mit welcher die stabilisierten Precursorfasern durch den Koaxialleiter geführt werden, über die Messung des elektrischen Widerstandes der entstandenen Kohlenstoff-Hohlfaser gesteuert wird. Es hat sich nämlich herausgestellt, dass die Höhe des elektrischen Widerstandes Rückschlüsse auf die Qualität der Kohlenstoff-Hohlfasern ziehen lassen. Bei Durchführung des erfindungsgemäßen Verfahrens konnte ermittelt werden, dass Precursorfasern, die bereits vorkarbonisiert sind, noch einen elektrischen Widerstand aufweisen, welcher im Bereich von 30 MΩ liegt, während Kohlenstofffasern mit einem hohen Anteil an Kohlenstoff einen elektrischen Widerstand aufweisen, der im Bereich von wenigen Ω, beispielsweise im Bereich von 10 bis 50 Ω liegt. Die Messung des elektrischen Widerstandes erfolgt hierbei über zwei Kupferelektroden, die an den Fasern in einem Abstand von 50 cm angeordnet sind.

Es ist auch möglich, das erfindungsgemäße Verfahren so durchzuführen, dass die stabilisierten Precursorfasern durch zwei oder mehr hintereinander angeordnete aus Koaxialleiter und Behandlungszone bestehende Reaktoren geführt werden.

Die mittels des erfindungsgemäßen Verfahrens hergestellten Kohlenstoff-Hohlfasern lassen sich vorteilhaft für Aufgaben im Bereich der Adsorption/Desorption beispielsweise zur Reinigung von Gasen oder Flüssigkeiten einsetzen. Hierzu können die Hohlfasern auch in einem nachfolgenden Behandlungsschritt einer Aktivierung unterzogen werden. Des weiteren können die mittels des erfindungsgemäßen Verfahrens hergestellten Kohlenstoff-Hohlfasern in besonderem Maße zur Verstärkung von Kunststoffen eingesetzt werden, d.h. zur Herstellung von Faserverbundwerkstoffen. Durch den Einsatz der erfindungsgemäß hergestellter Kohlenstoff-Hohlfasern anstelle von Kohlenstofffasern, deren Filamente einen Vollquerschnitt aufweisen, lassen sich Verbundwerkstoffe mit einem um 25% bis 50% reduzierten Gewicht herstellen. Dies ist insbesondere bei der Herstellung von maßhaltigen Bauteilen wie z.B. optischen Hohlspiegeln von Vorteil.

Im nachfolgenden werden zur Durchführung des erfindungsgemäßen Verfahrens geeignete Vorrichtungen näher beschrieben.

Es zeigen:
- Figur 1:: den schematischen Aufbau einer Applikationsvorrichtung, bei welcher die Auskopplung der Energie der hochfrequenten elektromagnetischen Wellen über einen in einer Hohlkammer befindlichen Koppelkegel erfolgt,
- Figur 2:: den schematischen Aufbau einer Applikationsvorrichtung, bei welcher ein Hohlraumresonator zur Auskopplung der Energie der hochfrequenten elektromagnetischen Wellen eingesetzt ist.
- Figur 3:: den schematischen Aufbau einer Vorrichtung, bei welcher eine koaxiale Zuführung zur Auskopplung der Energie der hochfrequenten elektromagnetischen Wellen eingesetzt ist.
- Figur 4:: Rasterelektronenmikroskopische (REM-) Aufnahme erfindungsgemäß hergestellter Kohlenstoff-Hohlfasern gemäß Beispiel 1 bei 600-facher Vergrößerung.
- Figur 5:: REM-Aufnahme erfindungsgemäß hergestellter Kohlenstoff-Hohlfasern gemäß Beispiel 1 bei 2000-facher Vergrößerung.
- Figur 6:: REM-Aufnahme des Querschnitts einer erfindungsgemäß hergestellten Kohlenstoff- Hohlfaser gemäß Beispiel 1 bei 5000-facher Vergrößerung.
- Figur 7:: Rasterelektronenmikroskopische (REM-) Aufnahme erfindungsgemäß hergestellten Kohlenstoff-Hohlfasern gemäß Beispiel 2.
- Figur 8:: REM-Aufnahme erfindungsgemäß hergestellten Kohlenstoff-Hohlfasern gemäß Beispiel 2.

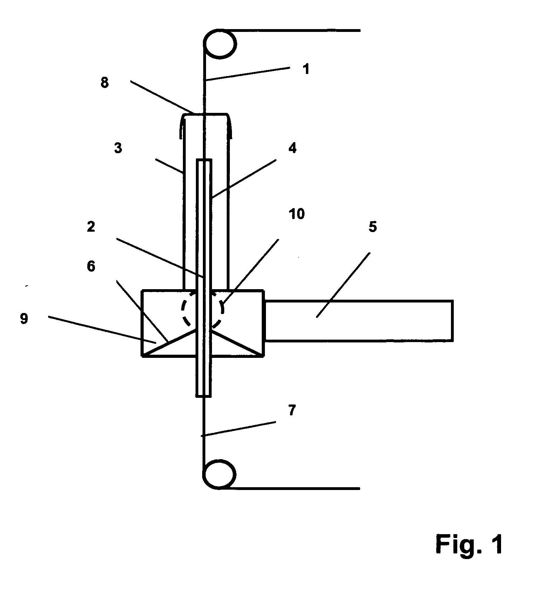

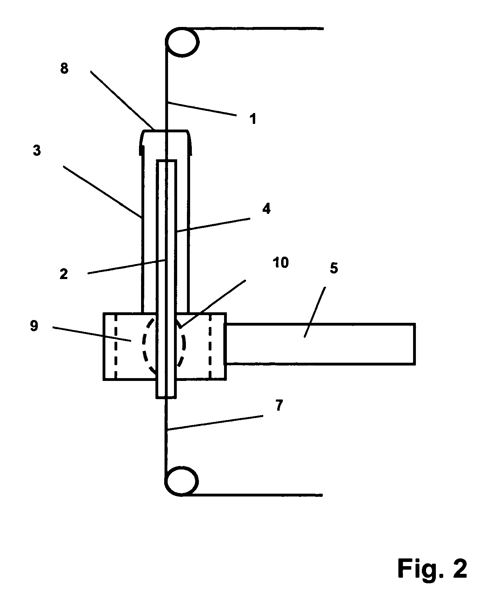

Zur Durchführung des erfindungsgemäßen Verfahrens werden stabilisierte Precursorfasern 1 als Innenleiter 2 durch einen hohlen Außenleiter 3 geführt, wodurch ein Koaxialleiter ausgebildet wird. Die über einen Hohlleiter 5 zugeführten hochfrequenten elektromagnetischen Wellen werden über einen in einer Hohlkammer 9 befindlichen Koppelkegel 6 (Figur 1) beziehungsweise über einen Hohlraumresonator 9 (Figur 2) in den aus Innenleiter 2 und hohlem Außenleiter 3 bestehenden Koaxialleiter in einer sich bildenden Behandlungszone 10 zugeführt und infolge der Umwandlung in Kohlenstofffasern in den Koaxialleiter 2, 3 ausgekoppelt. Um den Innenleiter 2 und innerhalb des Außenleiters 3 sowie innerhalb der Hohlkammer 9 bzw. des Hohlraumresonators 9 ist ein für hochfrequente elektromagnetische Wellen beziehungsweise Mikrowellen durchlässiges Rohr 4 beispielsweise aus einem Quarzwerkstoff angeordnet, in welches Schutzgas zur Erzeugung einer Schutzgasatmosphäre eingeleitet wird. Nach Verlassen der Behandlungszone 10 sind aus den stabilisierten Precursorfasern 1 Kohlenstoff-Hohlfasern 7 entstanden. Durch einen koaxialen Abschluss 8 wird eine Feldverteilung der Energie der elektromagnetischen Wellen in Form stehender Wellen im Koaxialleiter erreicht. Weitere Ausführungsformen, die für die Durchführung des erfindungsgemäßen Verfahrens geeignet sind, sind beispielsweise in DE 26 16 217, EP 0 508 867 oder WO 00/075 955 beschrieben.

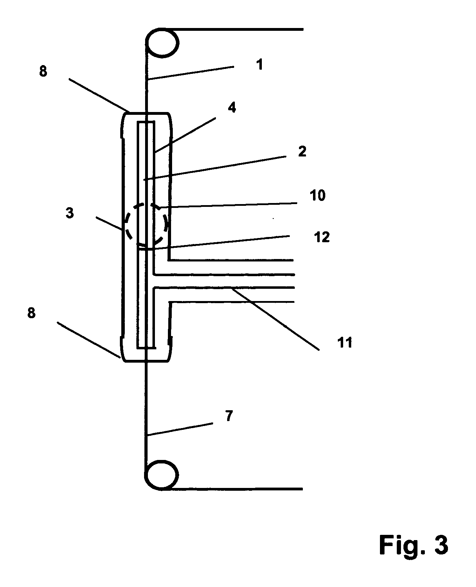

Gemäß Figur 3 erfolgt die Zuführung der hochfrequenten elektromagnetischen Wellen über einen Koaxialleiter, der T-förmig ausgebildet und dessen Innenleiter 11 elektrisch leitend ist. Der Außenleiter des T-förmigen Koaxialleiters wird durch den hohlen Außenleiter 3 sowie ein von diesem senkrecht abgehendes Ansatzstück gebildet. Der Innenleiter 11 kann beispielsweise rohrförmig ausgebildet sein. Über den T-förmigen Koaxialleiter wird die Energie der hochfrequenten elektromagnetischen Wellen zur Behandlungszone 10 umgeleitet und in den oberhalb des oberen Endes 12 des T-förmigen Innenleiters in den Auskoppelbereich, der gleichzeitig die Behandlungszone 10 darstellt, ausgekoppelt. Oberhalb des oberen Endes 12 des T-förmigen Innenleiters geht der leitfähig ausgeführte Innenleiter 11 in ein für hochfrequente elektromagnetische Wellen beziehungsweise Mikrowellen durchlässiges Rohr 4 beispielsweise aus Quarz über. Oberhalb des Übergangs 12, d.h. im Bereich des Rohres 4 übernehmen die stabilisierten Precursorfasern die Funktion des Innenleiters 2 des Koaxialleiters dessen Außenleiter mit 3 bezeichnet ist.

Die Erfindung wird anhand der nachfolgenden Beispiele näher erläutert:

### Beispiel 1:

Es wurde ein stabilisierter Kohlenstofffaser-Precursor aus Polyacylnitril vorgelegt, wobei der Kc hlenstofffaser-Precursor 12000 Filamente mit einem Filamentdurchmesser von ca. 8 µm aufwies. Laut Elementanalyse betrug der Anteil der bei der Karbonisierung flüchtigen Elemente H, N und O im Precursor 35,1 Gew.-%.

Die verwendete Applikationsvorrichtung zur Mikrowellenbehandlung entsprach im Aufbau der in Figur 2 dargestellten Vorrichtung. Zur Ankoppelung der Mikrowellenenergie wurde ein zylindrischer Resonator der Firma Muegge Electronics GmbH mit Wänden aus Aluminium und einem Durchmesser von 100 mm eingesetzt. In einem Mikrowellengenerator wurden Mikrowellen mit einer Wellenlänge von 2,45 GHz erzeugt und über einen mit dem Mikrowellengenerator verbundenen Rechteckhohlleiter des Typs R 26 dem Resonator zugeführt. Im Resonator wurde eine Feldstärke von 30 kV/m eingestellt. Aus dem Resonator wurde die Mikrowellenenergie in einen Koaxialleiter, dessen hohler Außenleiter einen Innendurchmesser von 100 mm aufwies, ausgekoppelt.

Koaxial innerhalb des hohlen Außenleiters befand sich ein Quarzrohr, welches sich durch den Resonator hindurch fortsetzte welches außerhalb des Resonators endete. Das Quarzrohr wurde von Stickstoff mit einem Volumenstrom von 25 I/min durchströmt.

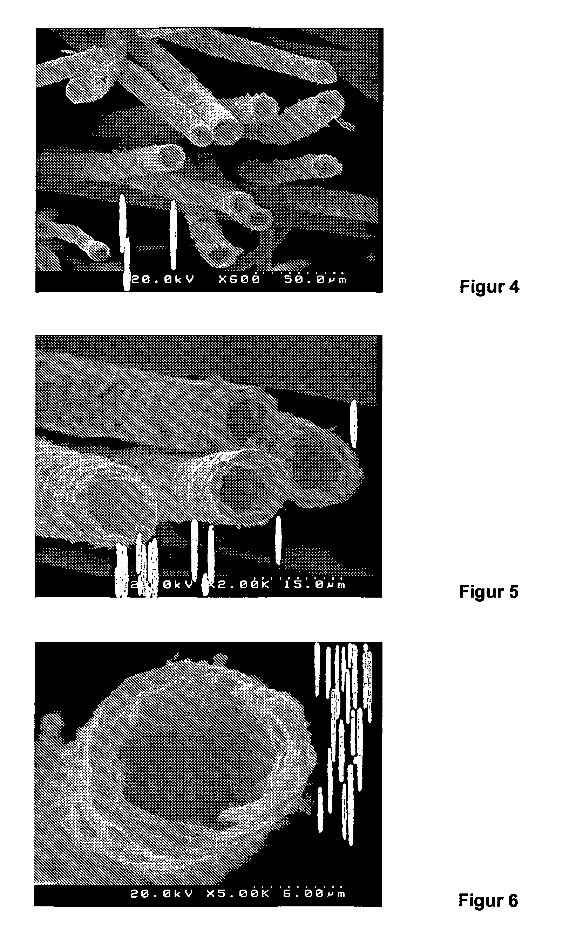

Anschließend wurde der stabilisierte Kohlenstofffaser-Precursor in den hohlen Außenleiter eingeführt und kontinuierlich mit einer Geschwindigkeit von 50 m/h durch das Quarzrohr hindurchgeführt, wodurch ein aus Precursor (Innenleiter) und hohlem Außenleiter bestehender Koaxialleiter entstand. Im Bereich des Resonators sowie im Auskoppelbereich in den Koaxialleiter wurde der Kohlenstofffaser-Precursor mit der Mikrowellenenergie beaufschlagt, die durch den Precursor absorbiert wurde. Hierdurch erhitzte sich der Precursor und es erfolgte eine Karbonisierung des Precursors unter gleichzeitiger Ausbildung einer Hohlfaser. Ausweislich der in den Figuren 4 bis 6 gezeigten REM-Aufnahmen resultierten Kohlenstoff-Hohlfasern mit einer porösen Wandstruktur, einem Innendurchmesser von ca. 10 µm und einer Wandstärke von ca. 2 - 3 µm.

### Beispiel 2:

Es wurde der in Beispiel 1 verwendete stabilisierte Kohlenstofffaser-Precursor aus Polyacylnitril mit 12.000 Filamenten und einem Filamentdurchmesser von ca. 8 µm vorgelegt sowie die in Beispiel 1 verwendete Vorrichtung eingesetzt.

Abweichend von Beispiel 1 wurde im vorliegenden Beispiel im Resonator eine Feldstärke von 30 kV/m eingestellt und der Kohlenstofffaser-Precursor mit einer Geschwindigkeit von 250 m/min durch die Vorrichtung geführt.

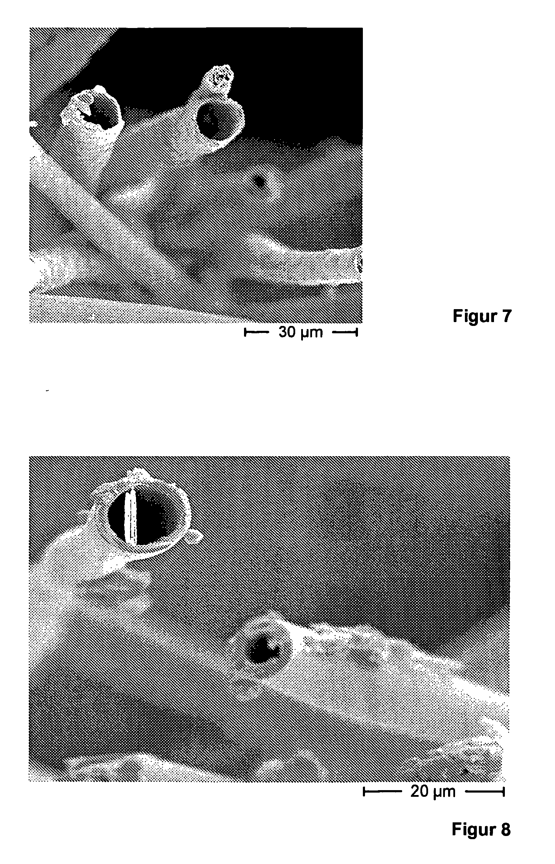

Ausweislich der in den Figuren 7 und 8 gezeigten REM-Aufnahmen hatten die resultierenden Kohlenstoff-Hohlfasern eine glatte Wandstruktur, einen Innendurchmesser von ca. 9 µm und eine Wandstärke von ca. 1,5 - 2 µm.

### Vergleichsbeispiel:

Es wurde ein Kohlenstofffaser-Precursor aus Polyacylnitril mit 12000 Filamenten und einem Filamentdurchmesser von ca. 7 µm eingesetzt. Der Kohlenstofffaser-Precursor war bereits einer Vorkarbonisierung unterzogen worden, wodurch der Anteil der bei der Karbonisierung flüchtigen Elemente H, N und O auf 28,7 Gew.-% reduziert war.

Es wurde wiederum die im Beispiel 1 verwendete Applikationsvorrichtung eingesetzt, wobei die Mikrowellenenergie im unbeschickten Resonator ebenfalls auf eine Feldstärke von 30 kV/m eingestellt wurde. Der Kohlenstofffaser-Precursor wurde mit einer Geschwindigkeit von 50 m/min durch die Apparatur gefördert.

Es wurden keine Kohlenstoff-Hohlfasern erhalten. Die Filamente der in diesem Vergleichsbeispiel erhaltenen Kohlenstofffasern wiesen einen Vollquerschnitt auf.

## Patentansprüche

1. Verfahren zur kontinuierlichen Herstellung von Kohlenstoff-Hohlfasern umfassend die folgenden Schritte:
- Vorlegen eines stabilisierten Kohlenstofffaser-Precursors (1), wobei der stabilisierte Kohlenstofffaser-Precursor hohlvolumenfrei ist,
- Bereitstellen einer Applikationsvorrichtung zur Behandlung des stabilisierten Kohlenstofffaser-Precursors mit hochfrequenten elektromagnetischen Wellen, welche Mittel zur Zuführung der elektromagnetischen Wellen in einen Auskoppelbereich (10) umfasst sowie einen in den Auskoppelbereich mündenden hohlen Außenleiter (3),
- Erzeugen eines Feldes der hochfrequenten elektromagnetischen Wellen und Einstellen einer Feldstärke im Auskoppelbereich der Applikationsvorrichtung im Bereich von 15 bis 40 kV/m,
- kontinuierliches Hindurchführen des stabilisierten Kohlenstofffaser-Precursors als Innenleiter (2) durch den hohlen Außenleiter (3), wodurch ein aus Außenleiter und Innenleiter bestehender Koaxialleiter ausgebildet wird, sowie durch den sich anschließenden Auskoppelbereich, dabei
- Erzeugen einer Schutzgasatmosphäre im Koaxialleiter sowie im Auskoppelbereich durch Hindurchleiten eines Schutzgases.

2. Verfahren nach Anspruch 1, **dadurch gekennzeichnet, dass** der Auskoppelbereich durch einen Hohlraumresonator (9) ausgebildet wird, aus dem die elektromagnetischen Wellen in den Koaxialleiter ausgekoppelt werden.

3. Verfahren nach Anspruch 1, **dadurch gekennzeichnet, dass** der Auskoppelbereich durch eine Kammer (9) ausgebildet wird, die einen Kopplungskegel (6) aufweist, über den die hochfrequenten elektromagnetischen Wellen in den Koaxialleiter ausgekoppelt werden.

4. Verfahren nach einem oder mehreren der Ansprüche 1 bis 3, **dadurch gekennzeichnet, dass** im Auskoppelbereich der Applikationsvorrichtung eine Feldstärke von 20 bis 30 kV/m erzeugt wird.

5. Verfahren nach einem oder mehreren der Ansprüche 1 bis 4, **dadurch gekennzeichnet, dass** die Applikationsvorrichtung ein Innenrohr (4) aus einem für hochfrequente elektromagnetische Wellen durchlässigen Material aufweist, wobei das Innenrohr im hohlen Außenleiter konzentrisch angeordnet ist und sich in diesem zumindest über einen Teilbereich erstreckt, wobei der Kohlenstofffaser-Precursor durch das Innenrohr geführt wird und das Schutzgas durch das Innenrohr hindurchgeleitet wird.

6. Verfahren nach einem oder mehreren der Ansprüche 1 bis 5, **dadurch gekennzeichnet, dass** der stabilisierte Kohlenstofffaser-Precursor einen Anteil an bei der Karbonisierung flüchtigen Elemente H, N und O von mindestens 30 Gew.-% enthält.

7. Verfahren nach Anspruch 6, **dadurch gekennzeichnet, dass** der Anteil an der Elemente H, N und O im stabilisierten Kohlenstofffaser-Precursor mindestens 35 Gew.-% beträgt.

8. Verfahren nach einem oder mehreren der Ansprüche 1 bis 7, **dadurch gekennzeichnet, dass** der stabilisierte Kohlenstofffaser-Precursor aus Polyacrylnitril hergestellt wurde.

9. Verfahren nach einem oder mehreren der Ansprüche 1 bis 8, **dadurch gekennzeichnet, dass** für die Erzeugung der Schutzgasatmosphäre, durch welche der stabilisierte Kohlenstofffaser-Precursor geführt wird, Stickstoff verwendet wird.

10. Verfahren nach einem oder mehreren der Ansprüche 1 bis 9, **dadurch gekennzeichnet, dass** in die Schutzgasatmosphäre geringe Mengen an Sauerstoff beigegeben werden.

11. Verfahren nach einem oder mehreren der Ansprüche 1 bis 10, **dadurch gekennzeichnet, dass** die Geschwindigkeit, mit welcher die stabilisierten Precursorfasern durch die Applikationsvorrichtung geführt werden, über die Messung des elektrischen Widerstandes der entstandenen Kohlenstoff-Hohlfaser gesteuert wird.

12. Verfahren nach einem oder mehreren der Ansprüche 1 bis 11, **dadurch gekennzeichnet, dass** die stabilisierten Precursorfasern mit einer solchen Geschwindigkeit durch die Applikationsvorrichtung geführt werden, dass sie beim Verlassen der Applikationsvorrichtung vollständig karbonisiert sind.

13. Verfahren nach einem oder mehreren der Ansprüche 1 bis 12, **dadurch gekennzeichnet, dass** die stabilisierten Precursorfasern durch zwei oder mehr hintereinander angeordnete Applikationsvorrichtungen geführt werden.

## Claims

1. Process for continuous production of hollow carbon fibres comprising the following steps:
- Provision of a stabilised carbon fibre precursor (1), where the stabilised carbon fibre precursor has no hollow volume,
- Provision of an application device for treatment of the stabilised carbon fibre precursor using high-frequency electromagnetic waves, said device comprising both means for supplying the electromagnetic waves to a decoupling region (10) and a hollow outer conductor (3) terminating in the decoupling region,
- Generation of a field of the high-frequency electromagnetic waves and setting of a field strength in the range from 15 to 40 kV/m in the decoupling region of the application device,
- Continuous conveying of the stabilised carbon fibre precursor as an inner conductor (2) through the hollow outer conductor (3), thereby forming a coaxial conductor consisting of an outer and an inner conductor, and through the subsequent decoupling region, at the same time
- Creating an inert gas atmosphere in the coaxial conductor and in the decoupling region by passing through an inert gas.

2. Process according to Claim 1, **characterized in that** the decoupling region is formed by a cavity resonator (9) from which the electromagnetic waves are coupled out into the coaxial conductor.

3. Process according to Claim 1, **characterized in that** the decoupling region is formed by a chamber (9) having a coupling cone (6) via which the high-frequency electromagnetic waves are delivered into the coaxial conductor.

4. Process according to one or more of Claims 1 to 3, **characterized in that** a field strength of 20 to 30 kV/m is generated in the decoupling region of the application device.

5. Process according to one or more of Claims 1 to 4, **characterized in that** the application device has an inner tube (4) made of a material transparent to high-frequency electromagnetic waves, said inner tube being arranged concentrically in the hollow outer conductor and extending over at least part of the length of the outer conductor, whereby the carbon fibre precursor is conveyed through the inner tube and the inert gas is passed through the inner tube.

6. Process according to one or more of Claims 1 to 5, **characterized in that** the stabilised carbon fibre precursor contains a proportion of the, during carbonisation, volatile elements H, N and O of at least 30 wt.%.

7. Process according to Claim 6, **characterized in that** the proportion of the elements H, N and O in the stabilised carbon fibre precursor is at least 35 wt.%.

8. Process according to one or more of Claims 1 to 7, **characterized in that** the stabilised carbon fibre precursor is made from polyacrylonitrile.

9. Process according to one or more of Claims 1 to 8, **characterized in that** nitrogen is used for the generation of the inert gas atmosphere through which the stabilised carbon fibre precursor is conveyed.

10. Process according to one or more of Claims 1 to 9, **characterized in that** small volumes of oxygen are admixed to the inert gas atmosphere.

11. Process according to one or more of Claims 1 to 10, **characterized in that** the velocity at which the stabilised precursor fibres are conveyed through the application device is controlled via the measurement of the electrical resistance of the hollow carbon fibre produced.

12. Process according to one or more of Claims 1 to 11, **characterized in that** the stabilised precursor fibres are conveyed through the application device at such a velocity that they are completely carbonised on leaving the application device.

13. Process according to one or more of Claims 1 to 12, **characterized in that** the stabilised precursor fibres are conveyed through two or more successive application devices.

## Revendications

1. Procédé de fabrication continue de fibres creuses en carbone, comprenant les étapes suivantes :
- présentation d'un précurseur (1) stabilisé de fibre de carbone, ledit précurseur stabilisé de fibre de carbone ne comportant pas de volumes creux,
- mise à disposition d'un dispositif d'application pour traiter le précurseur stabilisé de fibre de carbone avec des ondes électromagnétiques à haute fréquence, qui comprend des moyens pour acheminer les ondes électromagnétiques dans un espace de découplage (10), ainsi qu'un conducteur extérieur (3) creux, débouchant dans l'espace de découplage,
- génération d'un champ des ondes électromagnétiques à haute fréquence, et réglage d'une intensité de champ dans l'espace de découplage du dispositif d'application, dans la plage comprise entre 15 et 40 kV/m,
- passage continu du précurseur stabilisé de fibre de carbone, en tant que conducteur intérieur (2), dans le conducteur extérieur (3) creux, ce qui donne un conducteur coaxial formé d'un conducteur extérieur et d'un conducteur intérieur, ainsi que dans l'espace de découplage qui lui fait suite, avec
- création d'une atmosphère de gaz protecteur dans le conducteur coaxial ainsi que dans l'espace de découplage, par envoi d'un gaz protecteur.

2. Procédé selon la revendication 1, **caractérisé par le fait que** l'espace de découplage est formé d'une cavité résonante (9) à partir de laquelle les ondes électromagnétiques sont découplées dans le conducteur coaxial.

3. Procédé selon la revendication 1, **caractérisé par le fait que** l'espace de découplage est formé d'une chambre (9) qui présente un cône de couplage (6) par l'intermédiaire duquel les ondes électromagnétiques à haute fréquence sont découplées dans le conducteur coaxial.

4. Procédé selon une ou plusieurs des revendications 1 à 3, **caractérisé par le fait qu'**une intensité de champ de 20 à 30 kV/m est générée dans l'espace de découplage du dispositif d'application.

5. Procédé selon une ou plusieurs des revendications 1 à 4, **caractérisé par le fait que** le dispositif d'application présente un tube intérieur (4) réalisé dans un matériau laissant passer des ondes électromagnétiques à haute fréquence, ledit tube intérieur étant disposé de façon concentrique dans le conducteur extérieur creux et s'étendant au moins sur une portion de celui-ci, le précurseur de fibre de carbone étant guidé dans le tube intérieur, et le gaz protecteur étant envoyé dans le tube intérieur.

6. Procédé selon une ou plusieurs des revendications 1 à 5, **caractérisé par le fait que** le précurseur stabilisé de fibre de carbone contient une part d'au moins 30 % en poids d'éléments H, N et O qui sont volatils lors de la carbonisation.

7. Procédé selon la revendication 6, **caractérisé par le fait que** la part des éléments H, N et O dans le précurseur stabilisé de fibre de carbone est d'au moins 35 % en poids.

8. Procédé selon une ou plusieurs des revendications 1 à 7, **caractérisé par le fait que** le précurseur stabilisé de fibre de carbone était fabriqué à partir de polyacrylonitrile.

9. Procédé selon une ou plusieurs des revendications 1 à 8, **caractérisé par le fait que** l'on utilise de l'azote pour créer l'atmosphère de gaz protecteur, dans laquelle on fait passer le précurseur stabilisé de fibre de carbone.

10. Procédé selon une ou plusieurs des revendications 1 à 9, **caractérisé par le fait que** l'on ajoute de faibles quantités d'oxygène dans l'atmosphère de gaz protecteur.

11. Procédé selon une ou plusieurs des revendications 1 à 10, **caractérisé par le fait que** la vitesse à laquelle les fibres de précurseur stabilisé sont passées dans le dispositif d'application est contrôlée en mesurant la résistance électrique de la fibre creuse de carbone obtenue.

12. Procédé selon une ou plusieurs des revendications 1 à 11, **caractérisé par le fait que** les fibres de précurseur stabilisé sont passées dans le dispositif d'application à une vitesse telle qu'elles soient complètement carbonisées lorsqu'elles quittent le dispositif d'application.

13. Procédé selon une ou plusieurs des revendications 1 à 12, **caractérisé par le fait que** les fibres de précurseur stabilisé sont passées dans deux ou plus de deux dispositifs d'application installés les uns à la suite des autres.
